# FASCICULE DE BREVET EUROPEEN

(11) **EP 1 663 885 B1**
(45) Date de publication et mention de la délivrance du brevet: **30.11.2011**
(21) Numéro de dépôt: 04766486.7
(22) Date de dépôt: 12.08.2004
(51) Int. Cl.: C03B 33/023, C03B 33/033, C03B 33/037

(54) **DISPOSITIF POUR ROMPRE LES BORDS D'UN RUBAN DE VERRE PLAT**
VERFAHREN ZUM BRECHEN DER RÄNDER EINES FLACHGLASBANDS
DEVICE FOR BREAKING THE EDGES OF A FLAT GLASS RIBBON

(30) Priorité: 14.08.2003 FR 0309955
(43) Date de publication de la demande: 07.06.2006
(73) Titulaire: AGC Glass Europe, 1170 Bruxelles (Watermael-Boitsfort) (BE)
(72) Inventeur: BENSEDDIK, Michel, 59168 Boussois (FR)
(74) Mandataire: Verbrugge, Vivien François Emeric
(86) Numéro de dépôt international: PCT/EP2004/051783
(87) Numéro de publication internationale: WO 2005/021452

(56) Documents cités:
- EP-A- 0 402 342
- WO-A-02/055444
- US-A- 4 049 167
- US-A- 4 285 451
- US-A- 4 454 972

## Description

La présente invention concerne un dispositif pour rompre les bords longitudinaux d'un ruban de verre plat, en particulier les bords d'un ruban de verre flotté ou imprimé.

Le procédé de fabrication de verre flotté est un procédé de fabrication en ligne comportant :
■ l'enfournement des matières premières dans un four à environ 1500°C où le mélange de matières premières est progressivement fondu et affiné ;
■ le versage du mélange fondu sur un bain d'étain liquide où une feuille de verre se forme par « flottage » ;
■ la recuisson du ruban de verre, entraîné par des convoyeurs à rouleaux, dans une étenderie ou galerie de recuisson où le verre subit un refroidissement progressif et contrôlé;
■ la découpe du ruban transversalement (perpendiculairement au sens de défilement du ruban) en feuilles de verre ;
■ le débandage qui permet d'éliminer les bords latéraux des feuilles qui ne présentent pas la planéité et/ou l'épaisseur voulue.

Dans un procédé de production de verre imprimé, l'étape de versage du mélange fondu sur un bain d'étain liquide est remplacée par le passage du mélange entre deux rouleaux de laminage.

Dans les deux types de procédé, la découpe transversale et le débandage se font généralement grâce à une rayure préalable du verre, en surface, à l'endroit où la découpe devra avoir lieu. Ces opérations sont généralement appelées traçages transversal et longitudinal. Par longitudinal, on entend dans la présente description le sens parallèle au déplacement du ruban et par transversal, le sens perpendiculaire au déplacement du ruban de verre.

Pour le débandage, une ou deux rayures longitudinales sont prévues de chaque côté, avant découpe transversale du ruban en feuilles distinctes. Lorsque le ruban a été découpé en feuilles, les bords sont éliminés suite à l'avancement des feuilles contre un galet croqueur situé dans la zone d'avancement du bord longitudinal. Ce galet est alors statique. Il peut aussi être dynamique, et effectuer un mouvement de descente contre la face supérieure de la bande à éliminer.

Dans de nombreux cas, la rayure longitudinale et le choc avec le galet croqueur suffisent à faire tomber les bords latéraux des feuilles de manière nette. Cependant dans certains cas, surtout lors de la fabrication de verre relativement épais (10 à 25 mm), la cassure n'est pas suffisamment nette. Il se peut aussi que la chute du bord entraîne avec lui un coin de la feuille de verre, qui ne présente dès lors plus les dimensions souhaitées.

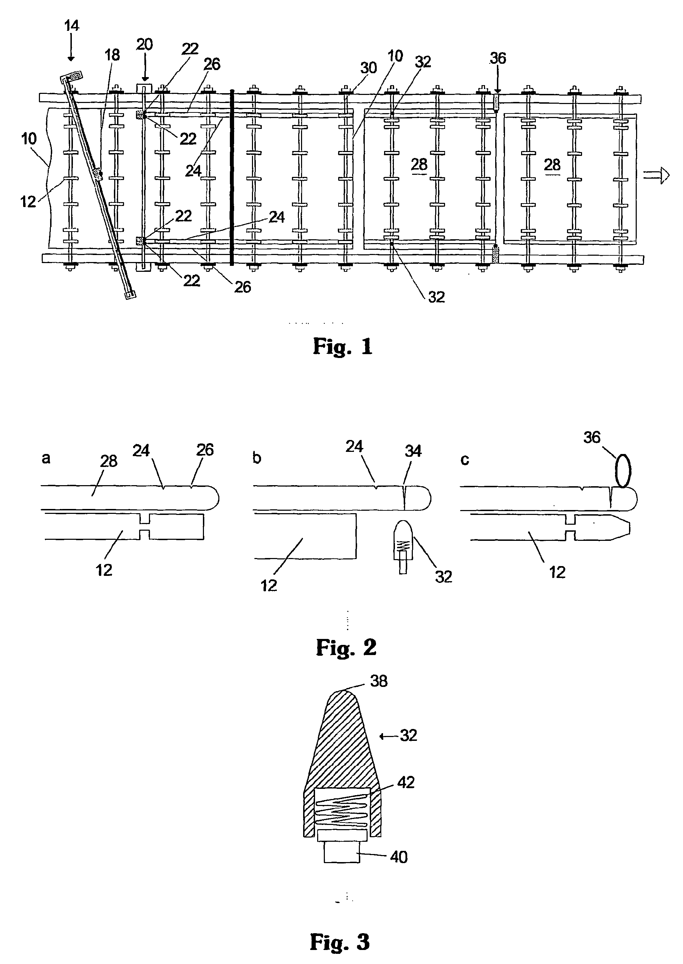

Le document WO 02/055444 décrit un procédé de découpe des bords d'un ruban de verre qui consiste à appliquer une force continue à la face inférieure du ruban à l'aide d'une roue, après l'étape de traçage longitudinal mais avant l'étape de traçage transversal, de manière à générer et faire se propager une fissure. La roue est en fait appliquée à l'intérieur du ruban par rapport à la ligne de traçage (fig. 3) et une roue supérieure peut être ajoutée, à l'extérieur du ruban, c'est-à-dire au dessus de la bande longitudinale à éliminer.

Dans ce procédé, une fissure longitudinale est générée dans le ruban avant sa séparation en feuilles et le traçage transversal est réalisé après l'application de la force qui génère la fissure.

US 4,454,972 décrit aussi un procédé de découpe des bords d'un ruban qui consiste à tracer deux lignes de découpe longitudinales à chacun des deux bords et à affaiblir le verre le long de la première ligne en actionnant une tête frappeuse à la surface inférieure du ruban. La surface supérieure de cette tête venant en contact avec le verre est en forme de rectangle très allongé. Le système est actionné par un axe monté excentriquement sur une roue. Le système fourni donc une frappe régulière et non modulable en terme de nombre de coups et de force de frappe. Si la force de frappe est trop importante elle peut provoquer des fissures se propageant dans le corps de la feuille. Si la frappe n'est pas assez importante elle ne permet pas de faciliter le rompage du bord et la chute de la bande peut provoquer la chute d'un coin de la feuille de verre.

De plus, ce système ne permet pas de suivre la dérive du ruban par rapport au convoyeur.

L'étape de frappe à la surface inférieure est effectuée après les étapes de traçage longitudinal et transversal mais avant découpe du ruban en feuilles.

La présente invention a pour objet un dispositif pour séparer les bords longitudinaux de feuilles de verre issues d'un ruban de verre plat se déplaçant en continu, horizontalement sur des moyens de transport, comprenant d'amont en aval :
■ des moyens pour générer une ligne de traçage longitudinal à chacun des bords longitudinaux du ruban ;
■ des moyens pour rompre le ruban continu en feuilles distinctes selon une ligne de traçage transversale préalablement générée ;
■ au moins un dispositif de frappe comportant une tête frappeuse, et des moyens permettant un mouvement vertical de la tête frappeuse contre la face du verre opposée à celle sur laquelle la ligne de traçage longitudinal a été générée, et comportant un moyen pour amortir la force de frappe de la tête lorsqu'elle entre en contact avec la feuille de verre ;
■ et des moyens de croquage pour séparer les bandes longitudinales de chaque feuille de verre.

Avantageusement, le dispositif selon l'invention comporte un dispositif de frappe à chacun des côtés de la ligne de découpe.

De manière particulière, le dispositif selon l'invention peut être modulé de manière à permet une frappe unique de la tête frappeuse (32) sur chaque feuille de verre ou à permettre une succession de frappes de la tête frappeuse (32) contre la surface de la feuille de verre (28).

Pour éviter la chute de coins dans la feuille, une frappe unique est de préférence prévue vers la fin du défilement de la feuille de manière à générer une fissure partant de l'endroit de la frappe et s'étendant vers l'amont jusqu'au bout de la feuille de verre.

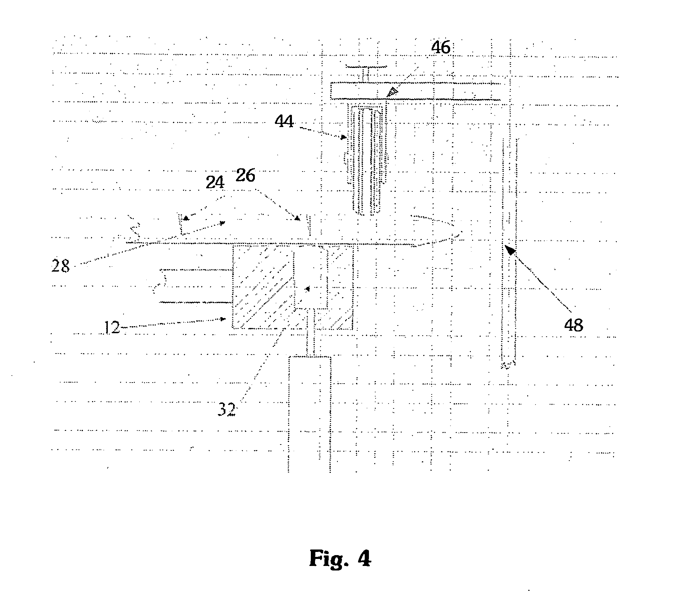

La présente invention est décrite ci-dessous, plus en détail, de manière non limitative, en référence aux dessins annexés, dans lesquels :
■ la fig. 1 représente une vue générale, en plan, de la ligne de découpe du verre ;
■ la fig. 2 (a, b, c) représente, en coupe, trois étapes du processus de rompage selon l'invention ;
■ la fig. 3 est une vue en coupe de la tête de frappe ;
■ la fig. 4 représente un mode particulier de réalisation du dispositif selon l'invention.

La figure 1 représente une vue générale de la ligne de découpe du verre plat. Un ruban de verre 10 issu d'une galerie de recuisson (non représentée) se déplace sur des rouleaux convoyeurs 12. Lorsque le ruban passe sous un pont de traçage transversal 14, une molette 16, raye le verre selon une ligne de découpe 18 perpendiculaire au sens de déplacement du verre. Le ruban 10 passe ensuite sous une station de traçage longitudinal 20, où deux molettes 22 rayent le ruban de verre en continu, provoquant, dans l'exemple illustré, deux rayures 24, 26, le long de chacun des bords longitudinaux du ruban. Ces deux rayures longitudinales 24, 26 sont également illustrées à la fig 2.a.

Le ruban 10 est ensuite découpé en feuilles distinctes 28, de manière traditionnelle par un léger mouvement vertical d'un axe 30 portant des rouleaux convoyeurs.

La feuille de verre 28 passe ensuite au niveau de têtes frappeuses 32, situées à la verticale chacune des deux rayures longitudinales extérieures 26. La tête 32 effectue un mouvement vertical pour venir frapper la surface inférieure du verre juste sous de la rayure 26 provoquant la propagation d'une fissure 34 au niveau de la rayure (voir fig 2.b.).

Le nombre de coups est réglable à la demande. La frappe peut être effectuée à la partie avant de la feuille 28, ou plus généralement lorsqu'il s'agit d'éviter la chute d'un coin de la feuille, à la partie arrière de la feuille. Plusieurs frappes peuvent aussi être prévues tout le long de la rayure 26. Les têtes frappeuses sont réglées indépendamment l'une de l'autre de sorte que des frappes peuvent être prévues au choix, au bord gauche, au bord droit, ou aux deux bords simultanément.

Le rompage du bord est ensuite provoqué par le passage du bord longitudinal de la feuille 28 contre un galet croqueur 36. Si la ou les frappes sont réglées correctement, la chute du bord s'effectue nettement et sans entraîner de coin cassé dans la feuille.

La fig. 3 montre la tête frappeuse 32 en coupe. Elle est constituée d'une masse dont la partie supérieure 38 est arrondie. Différentes formes peuvent être envisagées, par exemple conique (fig. 3) ou rectangulaire (fig. 4). La tête est montée sur un axe 40 relié à un système de vérin pneumatique (non représenté). Elle comporte également un ressort 42 permettant d'amortir la frappe au moment de l'impact contre la feuille de verre. Sans ce système d'amortissement du choc, des fissures pourraient être générées à l'intérieur de la feuille de verre.

De plus, le système de frappe est monté sur un transporteur mobile qui suit la dérive transversale du ruban, ce qui permet de frapper toujours précisément sous la rayure 26.

D'autres part, le système selon l'invention, tel qu'illustré à la fig. 4, peut comporter une ou plusieurs roues d'appui 44 supplémentaires. Ces roues 44 sont disposées sur la partie supérieure de la feuille de verre 28, le long de chacun des bords longitudinaux. Ces roues 44 ont pour fonction de maintenir les feuilles de verre 28 bien en contact avec les rouleaux convoyeurs 12 afin d'éviter toute possibilité que les feuilles 28 ne se soulèvent pendant les phases de frappe. Un système de fixation comportant une tige horizontale 46, et une tige verticale 48 permet le réglage de la position des roues 44 respectivement dans le sens de la largeur du ruban et dans le sens de la hauteur.

## Revendications

1. Dispositif pour séparer les bords longitudinaux de feuilles de verre (28) issues d'un ruban de verre plat (10), se déplaçant en continu, horizontalement sur des moyens de transport (12), comprenant d'amont en aval :
■ des moyens (14, 16) pour générer une ligne de traçage longitudinale (26) à chacun des bords longitudinaux du ruban (10);
■ des moyens (30) pour rompre le ruban continu (10) en feuilles distinctes (28) selon une ligne de traçage transversale (18) générée préalablement à la ligne de traçage longitudinale(26) ;
■ un dispositif de frappe muni d'une tête frappeuse (32) comportant un ressort (42) pour amortir la force de frappe de la tête (32) lorsqu'elle entre en contact avec la feuille de verre (28) et des moyens permettant un mouvement vertical de la tête frappeuse contre la face du verre opposée à la ligne de traçage longitudinal (26) ;
■ et des moyens de croquage (36) pour séparer les bandes longitudinales de chaque feuille de verre (28).

2. Dispositif selon la revendication précédente, **caractérisé en ce qu'**un dispositif de frappe est prévu à chacun des côtés de la ligne de découpe.

3. Dispositif selon l'une quelconque des revendications précédentes, **caractérisé en ce que** les moyens permettant un mouvement vertical de la tête frappeuse (32) sur la feuille de verre (28) sont conçus afin de permettre une seule frappe.

4. Dispositif selon l'une quelconque des revendications 1 à 2, **caractérisé en ce que** les moyens permettant un mouvement vertical de la tête frappeuse (32) sur la feuille de verre (28) sont conçus afin de permettre des frappes successives le long de la ligne de traçage longitudinale (26).

5. Dispositif selon la revendication 3, **caractérisé en ce que** les moyens permettant un mouvement vertical de la tête frappeuse (32) sur la feuille de verre (28) sont conçus afin de permettre la frappe vers la fin du défilement de la feuille de manière à générer une fissure (34) partant de l'endroit de la frappe et s'étendant vers l'amont jusqu'au bout de la feuille de verre.

6. Dispositif selon l'une quelconque des revendications précédentes, **caractérisé en ce qu'**il comporte une roue d'appui (44) le long d'un ou de chacun des bords longitudinaux de la feuille (28) de verre, évitant le soulèvement de la feuille lors de la frappe.

7. Dispositif selon l'une quelconque des revendications précédentes, **caractérisé en ce que** le système de frappe est monté sur un transporteur mobile suivant la dérive transversale du ruban.

## Claims

1. Device for separating the longitudinal edges of glass sheets (28) formed from a ribbon of flat glass (10) continuously moving horizontally on transport means (12), comprising from upstream down:
• means (14, 16) for generating a longitudinal marking line (26) on each of the longitudinal edges of the ribbon (10);
• means (30) for breaking the continuous ribbon (10) into separate sheets (28) along a transverse marking line (18) generated before the longitudinal marking line (26);
• a striking device fitted with a striking head (32) having a spring (42) for damping the striking force of the head (32) when it comes into contact with the glass sheet (28) and means for allowing a vertical movement ofthe striking head against the face of the glass opposite the longitudinal marking line (26);
• and snapping means (36) for separating the longitudinal strips of each glass sheet (28).

2. Device according to the preceding claim, **characterised in that** a striking device is provided on each of the sides of the cutting line.

3. Device according to any one of the preceding claims, **characterised in that** the means allowing a vertical movement of the striking head (32) on the glass sheet (28) are designed to allow a single strike.

4. Device according to any one of claims 1 to 2, **characterised in that** the means allowing a vertical movement of the striking head (32) on the glass sheet (28) are designed to allow successive strikes along the longitudinal marking line (26).

5. Device according to claim 3, **characterised in that** the means allowing a vertical movement of the striking head (32) on the glass sheet (28) are designed to allow striking towards the end ofthe run of the sheet in order to generate a crack (34) starting from the location of the strike and extending upstream to the end of the glass sheet.

6. Device according to any one of the preceding claims, **characterised in that** it comprises a support wheel (44) along one or each of the longitudinal edges of the glass sheet (28) to prevent the sheet from lifting during the striking action.

7. Device according to any one ofthe preceding claims, **characterised in that** the striking system is mounted on a mobile conveyor following the transverse flow of the ribbon.

## Patentansprüche

1. Vorrichtung zur Trennung der Längsränder von Glasscheiben (28), die von einem Flachglasband (10) hervorgehen, das sich kontinuierlich bewegt, horizontal auf Transportmitteln (12), die von stromaufwärts bis stromabwärts Folgendes umfasst:
- Mittel (14, 16) zur Erzeugung einer longitudinalen Anreißlinie (26) an jedem der longitudinalen Ränder des Bandes (10);
- Mittel (30) zum Brechen des kontinuierlichen Bandes (10) in einzelne Scheiben entsprechend einer transversalen Anreißlinie (18), die vor der longitudinalen Anreißlinie (26) erzeugt wurde;
- eine Schlagvorrichtung, die mit einem Schlagkopf (32) versehen ist, der eine Feder (42) umfasst, um die Schlagstärke des Kopfes (32) abzufedern, wenn dieser mit der Glasscheibe (28) in Kontakt tritt, und Mittel umfasst, die eine vertikale Bewegung des Schlagkopfes gegen die der longitudinalen Anreißlinie (26) entgegengesetzten Glasseite erlaubt;
und Bruch-Mittel (36), um die longitudinalen Bänder von jeder Glasscheibe (28) zu trennen.

2. Vorrichtung nach dem vorhergehenden Anspruch, **dadurch gekennzeichnet, dass** eine Schlagvorrichtung an jeder Seite der Schnittlinie vorgesehen ist.

3. Vorrichtung nach einem der vorhergehenden Ansprüche, **dadurch gekennzeichnet, dass** die Mittel, die eine vertikale Bewegung des Schlagkopfes (32) auf die Glasscheibe (28) ermöglichen, dazu konzipiert sind, einen einzigen Schlag zu erlauben.

4. Vorrichtung nach einem der Ansprüche von 1 bis 2, **dadurch gekennzeichnet, dass** die Mittel, die eine vertikale Bewegung des Schlagkopfes (32) auf die Glasscheibe (28) ermöglichen, dazu konzipiert sind, aufeinanderfolgende Schläge entlang der longitudinalen Anreißlinie (26) zu erlauben.

5. Vorrichtung nach Anspruch 3, **dadurch gekennzeichnet, dass** die Mittel, die eine vertikale Bewegung des Schlagkopfes (32) auf die Glasscheibe (28) ermöglichen, dazu konzipiert sind, den Schlag am Ende des Durchlaufs der Scheibe auszuführen, sodass ein Riss (34) erzeugt wird, der am Ort des Schlages beginnt und der stromaufwärts bis ans Ende der Glasscheibe verläuft.

6. Vorrichtung nach einem der vorhergehenden Ansprüche, **dadurch gekennzeichnet, dass** sie entlang einem oder jedem der Längsränder der Glasscheibe (28) ein Stützrad (44) umfasst, die beim Schlag eine Anhebung der Scheibe verhindert.

7. Vorrichtung nach einem der vorhergehenden Ansprüche, **dadurch gekennzeichnet, dass** das Schlagsystem auf einem mobilen Förderer montiert ist, der dem transversalen Abtreiben bzw. Abweichen bzw. Abgleiten des Bandes folgt.
